# EUROPEAN PATENT SPECIFICATION

(11) **EP 2 605 098 B1**
(45) Date of publication and mention of the grant of the patent: **01.04.2015**
(21) Application number: 11009915.7
(22) Date of filing: 16.12.2011
(51) Int. Cl.: G05B 19/418

(54) **Control system and a control method for controlling a machine**
Steuerungssystem und Steuerungsverfahren zur Steuerung einer Maschine
Système de contrôle et procédé de contrôle permettant de contrôler une machine

(43) Date of publication of application: 19.06.2013
(73) Proprietor: Robert Bosch GmbH, 70442 Stuttgart (DE)
(72) Inventor: Dirkx, Walrick, 5641 JT Eindhoven (NL); van Loon, Kees, 5509 RG Veldhoven (NL)
(74) Representative: Thürer, Andreas

(56) References cited:
- EP-A1- 2 048 560
- EP-A2- 1 098 353
- US-A1- 2004 166 689
- US-A1- 2010 063 620

## Description

The present invention relates to a control system and a control method for controlling a machine. In particular, the present invention relates to a control system and a control method for controlling a machine which is used for producing an article.

US 2010/0063620 A1 discloses an automated material handling system for combining an overhead conveyor with a material control system. EP 2 048 560 A1 shows a work conveyance facility system by automated guided vehicle and work mounting truck. In both systems, carriers which may comprise a coil are moved on a track. However, the beginning and/or end positions of a track is unchanged in the operation of the systems.

Machines for producing an article are known in which materials to be used in the production process are to be transported from a load position to a working station, for example, a process chamber, and thereafter to an unload position.

That is, transport carriers are used which are guided and moved along tracks between the load position, the working station and the unload position. In some cases, the carriers must be transported automatically from the unload position back to the load position.

For optimising the process, the complete way the carriers must travel in the machine from the starting position to specific other positions in the machine and back to the starting position should be as short as possible. Therewith, the number of carriers necessary for the transport in the machine can be reduced to a minimum. In addition, the working cycle of the machine can be optimized. Further, it is required that the transport of the carriers and therewith the articles is performed with the minimum use of resources. A use of recourses includes both the components necessary for moving the carriers in the machine and the consumption of energy necessary for moving the carriers.

Therefore, it is an object of the present invention to provide a control system and a control method for controlling a machine which can fulfil the above mentioned needs and which are able to control the complete machine. Herein, the control of the complete machine includes the control of the process performed by the machine and the control of the transport needed in the machine.

This object is solved by a control system for controlling a machine according to claim 1.

The above mentioned control system provides an advantageous solution for a machine and its control system being simple in construction, very flexible, and realisable with low costs. The control system can easily be adapted to a vast variety of different machine layouts. Moreover, the control system is highly effective in terms of time needed for transporting carriers in the machine and energy to be applied in this regard.

Further advantageous developments are set out in the dependent claims.

Advantageously, the control system further comprises process control means for controlling a process performed by said machine, wherein said process control means is arranged to control said process while said coil control means is controlling a motion of said movable coil. Therewith, a short working cycle in the machine can be achieved.

The coil control means can be arranged to control said movable coil such that said movable coil is part of one of said at least two tracks, when said movable coil is arranged in said one track of said at least two tracks.

The coil control means can be arranged to control said movable coil such that said movable coil is added to one of said at least two tracks, when said movable coil is controlled to stop at said one of said at least two tracks, and that said movable coil is removed from said one of said at least two tracks, when said movable coil is controlled to start moving from said one of said at least two tracks to another one of said at least two tracks.

It is possible that said coil control means is arranged to control said movable coil such that it can only be added to or removed from the beginning or the end of said at least two tracks.

It is further possible that said coil control means is arranged to control said movable coil between two to four different tracks of said at least two tracks.

The control system can be configured such that a motion of said movable coil comprises translation and/or rotation.

The above-described control system can be part of a machine. Herein, the machine comprises a plurality of carriers for transporting an article, at least two tracks by the use of which said plurality of carriers can move and which are arranged spaced to each other, and a movable coil movable between said at least two tracks, wherein said movable coil is usable for moving a carrier between said at least two tracks, and wherein said at least two tracks are arranged to receive at least one movable coil,

In the machine, a track of said at least two tracks possibly comprises zero or more fixedly arranged coils.

The above mentioned object is further solved by a control method for controlling a machine according to claim 10.

Further possible implementations of the invention also comprise combinations of specific features described above or in the following as regards the embodiments, even if they are not explicitly mentioned. Therefore, the person skilled in the art will also add single aspects as improvements or supplements to the basic form of the invention.

In the following, the present invention is described in more detail with the help of embodiments by reference to the appended drawings. The figures show:
- Fig. 1: a schematic block diagram for explaining a basic track layout usable in a machine which is controlled by a control system according to a first embodiment;
- Fig. 2: a schematic block diagram of a basic track layout usable in a machine which is controlled by the control system according to the first embodiment;
- Fig. 3: a schematic block diagram of a coil usable in a machine which is controlled by the control system according to the first embodiment;

- Fig. 4: a simplified top view of a machine controllable by a control system according to a second embodiment;
- Fig. 5: a simplified top view of a machine controllable by a control system according to a third embodiment; and
- Fig. 6: a simplified top view of a machine controllable by a control system according to a fourth embodiment.

In the figures, similar elements or elements having similar function are marked with the same reference signs unless specified otherwise.

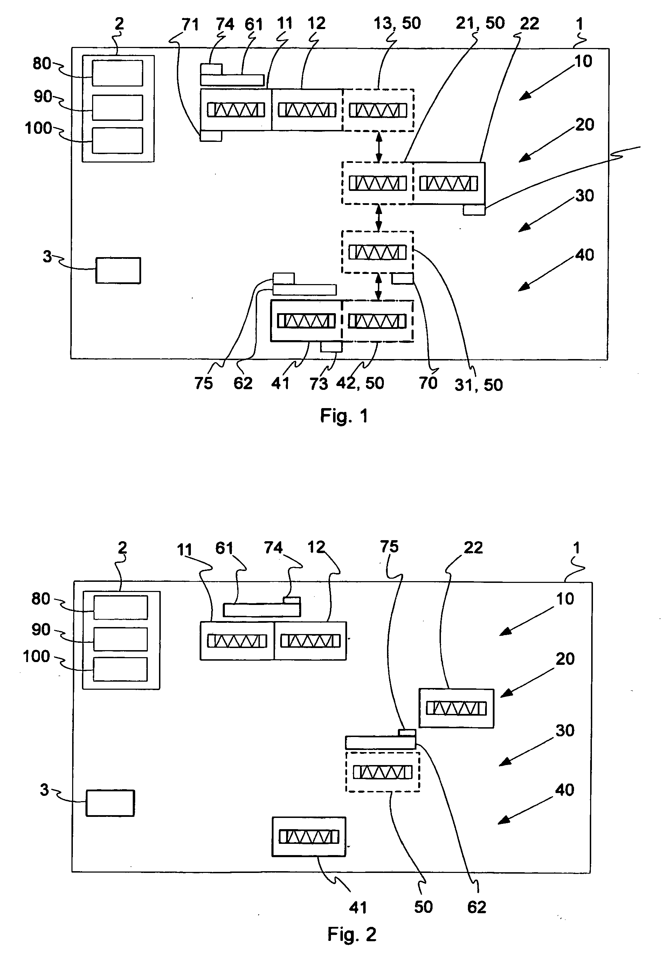

Fig. 1 shows a machine 1 with a control system 2. The machine 1 can be used for performing a process. The process can comprise producing and/or treating an article 3 etc. The machine 1 further comprises a first track 10, a second track 20, a third track 30, a fourth track 40, a movable coil 50, carriers 61, 62, and first to sixth detection means 70 to 75. Each track of the tracks 10, 20, 30, 40 comprises at least one coil. That is, the first track 10 comprises altogether three coils, i.e. a coil 11, a coil 12, and a coil 13. The coil 13 represents in the first track 10 the movable coil 50. The second track 20 comprises two coils, that is, a coil 21 and a coil 22. The coil 21 represents in the second track 20 the movable coil 50. The third track 30 comprises only one coil, i.e. a coil 31. The coil 31 represents in the third track 30 the movable coil 50. The fourth track 40 comprises two coils, that is, a coil 41 and a coil 42. The coil 42 represents in the fourth track 40 the movable coil 50. To better signify that the coils 13, 21, 31 and 42 are movable between the first track 10 and the fourth track 40, the coils 13, 21, 31 and 42 are depicted with broken lines.

In Fig. 1, the control system 2 comprises coil control means 80, carrier control means 90, and process control means 100.

The coil control means 80 is able to control the coils 13, 21, 31, 42, that means, the movable coil 50. Specifically, the coil control means 80 performs a control such that the movable coil 50 is either added to or removed from a track. Herein, the coil control means 80 uses a detection result of the first detection means 70 which detects the state of the movable coil 50, for example its velocity, its position in the machine 1, whether it is added or removed from a track 10, 20, 30, 40, whether a carrier of the carriers 61, 62 is loaded thereon, which carrier of the carriers 61, 62 is loaded thereon, etc. The first detection means 70 can also be referred to as movable coil detection means.

In addition, the coil control means 80 is able to control the coils 11, 12, 22, 41, that means, the coils which are fixedly arranged and cannot be moved. Specifically, the coil control means 80 performs a control such that the coils 11, 12, 22, 41 are switched on or off, etc. Herein, the coil control means 80 uses a detection result of the second to fourth detection means 71, 72, 73 which detect the state of the first, second and fourth track 10, 20, 40, for example its length, whether a movable coil 50 it is added or removed therefrom, whether a carrier of the carriers 61, 62 is loaded thereon, etc. The second to fourth detection means 71, 72, 73 can also be referred to as track state detection means.

The carrier control means 90 is able to control the carriers 61, 62 on their way in the machine 1. Herein, the carrier control means 90 uses a detection result of the fifth and/or sixth detection means 74, 75. The fifth detection means 74 detects the state of the carrier 61 at which it is arranged. The sixth detection means 75 detects the state of the carrier 62 at which it is arranged. The state of one of the carriers 61, 62 is, for example, the carrier velocity, the carrier position in the machine, whether the carrier is positioned on one or more than one coil, whether the carrier is loaded or unloaded, etc. The fifth and/or sixth detection means 74, 75 can also be referred to as carrier detection means.

The process control means 100 is able to control the process to be performed by the machine 1.

Fig. 2 shows the actual track layout of the machine 1 of the first embodiment, in which the movable coil 50 is moveable between the first track 10 and the fourth track 40. In the situation shown in Fig. 2, the movable coil 50 is positioned in the third track 30. Due to this, the movable coil 50 is in fact the coil 31 (Fig. 1) of the third track 30. Since no other coil or part of the third track 30 is present, the movable coil 50 builds up the third track 30 alone. In contrast thereto, the first track 10 comprises two coils, the coils 11, 12; the second track 20 comprises one coil, the coil 22; and the fourth track 40comprises one coil, the coil 41.

In other words, in the example of Fig. 2, the movable coil 50 is added to the third track 30 and belongs thereto. In contrast thereto, the movable coil 50 does not belong to the first, second, or fourth track 10, 20, 40, since the movable coil 50 is removed therefrom.

When the movable coil 50 is moved from the third track 30 to the first track 10, the movable coil 50 is first removed from the third track 30 and, after arriving at the first track 10, added to the first track 10 as the coil 13 (Fig. 1) of the first track 10. In this case, the movable coil 50 is added to the first track 10 so that the first track 10 comprises three coils including the movable coil 50. In contrast thereto, in this case, the second track 20 comprises one coil, the coil 22; the third track 30 comprises no coil; and the fourth track 40 comprises one coil, the coil 41.

When the movable coil 50 is moved from the third track 30 to the second track 20, the movable coil 50 is first removed from the third track 30 and, after arriving at the second track 20, added to the second track 20 as the coil 21 (Fig. 1) of the second track 20. In this case, the movable coil 50 is added to the second track 20 so that the second track 20 comprises two coils including the movable coil 50. In contrast thereto, in this case, the first track 10 comprises two coils, the coils 11, 12; the third track 30 comprises no coil; and the fourth track 40 comprises one coil, the coil 41.

When the movable coil 50 is moved from the third track 30 to the fourth track 40, the movable coil 50 is first removed from the third track 30 and, after arriving at the fourth track 40, added to the fourth track 40 as the coil 42 (Fig. 1) of the fourth track 40. In this case, the movable coil 50 is added to the fourth track 40 so that the fourth track 40 comprises two coils including the movable coil 50. In contrast thereto, in this case, the first track 10 comprises two coils, the coils 11, 12; the second track 20 comprises one coil, the coil 22; and the third track 30 comprises no coil.

With regard to such a machine layout, the movable coil 50 can only be part of one track of the first track 10 to the fourth track 40 at a time. However, the movable coil 50 can be moved to another track of the first track 10 to the fourth track 40, while the machine 1 remains operational. Therewith, the single movable coil 50 can be used to control carriers 61, 62 on multiple tracks, in this case, the first to fourth track 10, 20, 30, 40. As also shown in Fig. 1 and Fig. 2, the movable coil 50 can only be removed from or added to another track of the first track 10 to the fourth track 40, if the coil 50 is positioned at the beginning or end of the track.

Fig. 1 and Fig. 2 further show that a single coil, i.e. the movable coil 50, can be used by at most four different tracks. As mentioned above, the movable coil 50 comprises the first detection means 70 for detecting the state of the movable coil 50. The first detection means 70 is arranged at the movable coil 50 and remains at the movable coil 50, when the movable coil 50 is moved between the first track 10 and the fourth track 40.

The control system 2 of the machine 1 always adapts to the position of the movable coil 50. That is, the control of the control system 2 is changed regarding the coils that belong to one specific track of the first to fourth track 10, 40.

As it is shown in Fig. 1 and Fig. 2 the beginning and end positions of the track of the first track 10 to the fourth track 40 will change, when the movable coil 50 is removed from or added to a track.

In Fig. 2, the carrier 61 is moved on the first track 10. In contrast thereto, the carrier 62 is carried by and locked to the movable coil 50. The movable coil 50 is positioned in the track 30. On the second track 20 and the fourth track 40 no carrier is present.

If a carrier, for example the carrier 62 in Fig. 2, arrives at the movable coil 50 and is above the movable coil 50, the carrier 62 will be removed from its track and then added to a new track, where the movable coil 50 moves to. The carrier 62 will remain locked to the movable coil 50, while it is moved to the new track. The carrier 61 and the carrier 62 each have a carrier ID, which belongs to the specific carrier 61, 62 and cannot be assigned to another carrier in the system, that is, the machine 1. When the movable coil 50 is added to another track, the carrier 62 adapts the position definition of the new track. For example, when the carrier 62 is removed from the third track 30 by the movable coil 50, to which the carrier 62 is locked, the carrier 62 can be moved with the movable coil 50 to the second track 20. When the movable coil 50 is removed from the third track 30, the third track 30 does not have any coil or carrier anymore.

If the first detection means 70 of the movable coil 50 detects multiple carriers or a part of a carrier 61, 62, removing the movable coil 50 is not possible. Such case is shown in the first track 10, where the carrier 61 is arranged above the coil 11 and the coil 12. When the movable coil 50 with a carrier, for example the carrier 62, is removed, the movable coil 50 must be at stand still.

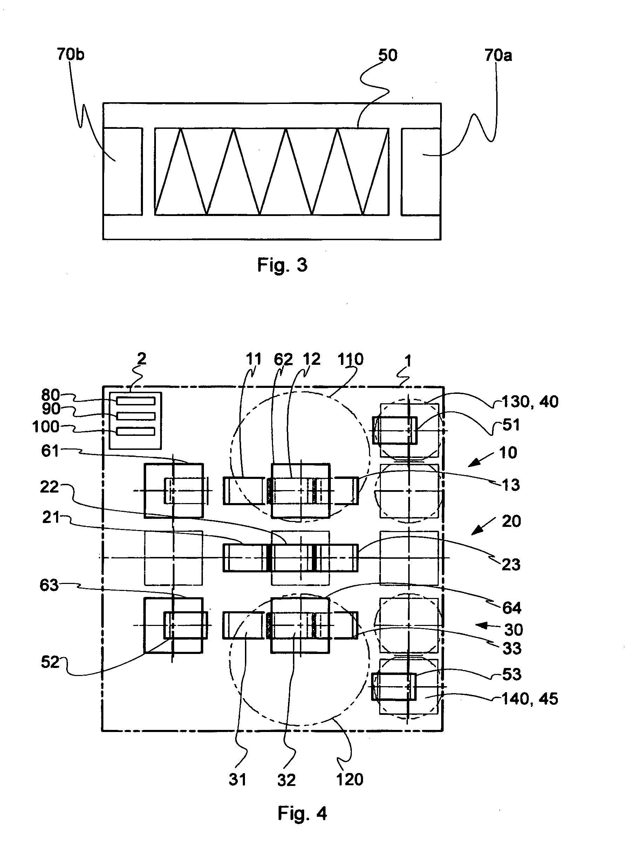

Fig. 3 shows a further possible configuration of one coil usable in the machine 1 of the first embodiment. Fig. 3 shows as an example the configuration of the movable coil 50. However, all other coils of the machine 1, i.e. the coils 11, 12, 22, 41 could be configured in the same way.

As shown in Fig. 3 the first detection means 70 of the movable coil 50 comprises two sensors 70a and 70b. The sensor 70a is arranged in Fig. 3 on the right side of the movable coil 50. The sensor 70b is arranged in Fig. 3 on the left side of the movable coil 50. The first detection means 70 detects whether or not a carrier is present above the movable coil 50. In case a carrier is present, the first detection means 70 detects the position of the carrier.

Further, for example, when the carrier 61 is moved over the movable coil 50, the detection means 70 can detect, whether the carrier 61 is moved over the movable coil 50 in the direction from left to right or vice versa. This is due to the fact that the sensors 70a and 70b detect the carrier 61 or 62 at different points in time when they move over the movable coil 50 and thus, give a signal one after the other.

The second to fourth detection means 71, 72, 73 which detect the state of the first, second and fourth track 10, 20, 40, as mentioned above, can be constructed in a similar way. That is, in case each of the coils 11, 12 of the first track 10 comprises two sensors, and if the movable coil 50 is not part of the first track 10, the second detection means 71 comprises four sensors. In case the movable coil 50 is part of the first track 10, the second detection means 71 comprises six sensors. The same is analogously valid for the third and fourth detection means 72, 73.

In case the movable coil 50 builds up the third track 30, the first detection means 70 of the movable coil 50 detects the state of the third track 30. In that case, the first detection means 70 of the movable coil 50 can also be referred to as track state detection means.

In addition, the position of the movable coil 50 can be detected and controlled by further means which is not shown in Fig. 3.

Fig. 4 shows in a second embodiment an example of the machine 1 in which the principle of the transport system explained with reference to Figs. 1 and 2 is adopted. The machine 1 has, besides the control system 2 having the coil control means 80, carrier control means 90, and process control means 100, two process chambers 110 and 120. Carriers 61 to 64 are moved on three different tracks 10, 20, 30. Herein, the first track 10 is the track where the carriers 61 and 62 are moved from a starting position, where the carrier 61 is positioned in Fig. 4, to process chamber 110 and then further to an unload position 130. At the unload position 130, articles 3 to be processed in the process chamber 110 can be unloaded from one of the carriers 61, 62 after another. Thereafter, the carrier 61 or 62 can be moved to the second track 20, which is used for returning the carriers 61, 62 back to the starting position. In the same way, the carriers 63 and 64 can be moved from the starting position, at which the carrier 63 is positioned in Fig. 4, via the third track 30 to the process chamber 120, then further to an unload position 140, and thereafter via the second track 20 back to the starting position.

The tracks 10, 20, 30 each have three fixedly arranged coils. The first track 10 has the coil 11, the coil 12 and the coil 13. The second track 20 has the coil 21, the coil 22, and the coil 23. The third track 30 has the coil 31, the coil 32, and the coil 33. The carriers 61, 62 can be moved one after the other with a movable coil 51 between the first track 10 and the unload position 130. Therewith, the unload position 130 builds up a fourth track 40. The movable coil 51 can also move the carriers 61 and 62 from the unload position 130 to the second track 20. The movable coil 51 can also move the carriers 61 and 62 from the first track 10 directly to the second track 20. On the other side of the second track 20, the carriers 61, 62 can be moved with a movable coil 52 back to the first track 10 and thus to their starting position where the carriers 61, 62 can be loaded again.

Further, a movable coil 53 can move the carriers 63, 64 between the second and third tracks 20, 30 and the unload position 140. Therewith, the unload position 140 builds up a fifth track 45. The movable coil 53 can also move the carriers 63, 64 from the unload position 140 to the second track 20. The movable coil 53 can also move the carriers 63, 64 from the third track 30 directly to the second track 20. On the other side of the second track 20, the carriers 63, 64 can be moved with the movable coil 52 back to the third track 30 and thus to their starting position, where the carriers 63, 64 can be loaded again.

That means, when one of the carriers 61, 62, 63, 64 is moved back on the second track 20 by the coils 21, 22 and 23, the movable coil 53 can move the carriers 61, 62 from the second track 20 to the first track 10. In addition, the movable coil 53 can move the carriers 63, 64 from the second track 20 to the third track 30. In this way, the machine 1 has a shared middle return track 20 to transport the carriers 61, 62, 63, 64 from the unload positions 130, 140 back to the both load or starting positions.

Each of the movable coils 51, 52, 53 is shared between three different tracks. However, the movable coil 51 is shared by other tracks, namely the tracks 10, 20, 40, than the movable coil 52 which is shared by the tracks 10, 20, 30 or the movable coil 53 which is shared by the tracks 20, 30, 45.

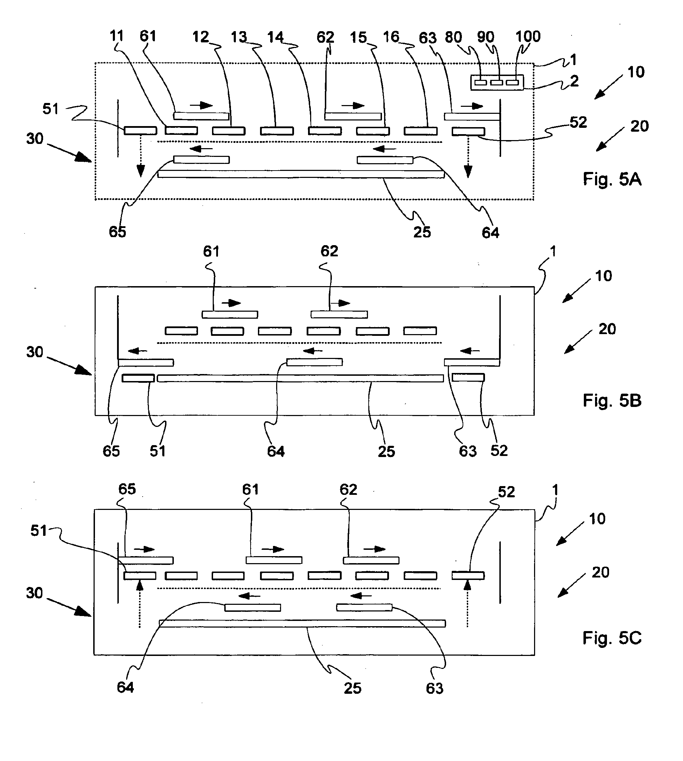

Figs. 5A to 5C show in a third embodiment a further example of a machine 1 according to the basic layout described above with reference to Figs. 1 to 3. In Fig. 5A to 5C, the position of the carriers 61, 62, 63, 64 and 65 is shown at different points in time. Fig. 5B shows a position of the carriers 61 to 65 at a point in time later than the point in time shown in Fig. 5A. Fig. 5C shows a position of the carriers 61 to 65 at a point in time later than the situation illustrated in Fig. 5B. For the sake of better reading Fig. 5A to 5C, the reference signs for the first track 10 are only given in Fig. 5A.

In each of Figs. 5A to 5C, the machine 1 has a first track 10, a transport belt 25, a second track 20, and a third track 30. The first track 10 comprises six fixedly arranged coils 11, 12, 13, 14, 15, 16 for transporting the carriers 61 to 65. In Fig. 5A and Fig. 5C, the second and third track 20, 30 are empty, i.e. each of them comprises no coil. On the first track 10, the carriers 61 to 65 are carried in the direction of the black arrow shown in Fig. 5A over the carriers 61, 62, and 63. On the transport belt 25 as well as the second and third tracks 20, 30, the carriers 61 to 65 are carried in the direction of the black arrow shown over the carriers 64 and 65 in Fig. 5A. The second track 20 is responsible for pushing the carriers 61 to 65 on the transport belt 25. The third track 30 is responsible for pulling the carriers 61 to 65 from the transport belt 25. Therewith, the first track 10 is used for transporting the carriers 61 to 65 in a forward direction, whereas the transport belt 25 as well as the second and third tracks 20, 30 are used for transporting the carriers 61 to 65 in a return direction.

At the beginning of the first track 10, a movable coil 51 movable between the first track 10 and the third track 30 can be added to or removed from the first track 10 or the third track 30. In Fig. 5A the movable coil 51 is positioned in the first track 10. Therefore, the movable coil 51 is added to the first track 10 and belongs to the first track 10. At the end of the first track 10, the movable coil 52 is movable between the first track 10 and the second track 20. The movable coil 52 can either be added to or removed from the first track 10 or added to or removed from the second track 20. In Fig. 5A, the movable coil 52 is positioned in the first track 10, too. Therefore, also the movable coil 52 is added to the first track 10 and belongs to the first track 10.

In case the movable coil 52 is added to the first track 10, as it is shown in Fig. 5A, the movable coil 52 is removed from the second track 20. With the machine 1 according to such a configuration, the carriers 61 to 65 can be moved over time as shown in Figs. 5A to 5C.

As shown in Figs. 5A to 5C, the carriers 61 and 62 are moved along the first track 10. In Fig. 5A the carrier 63 has reached the movable coil 52. Therefore, the carrier 63 is locked to the movable coil 52 and then moved to the second track 20 by the use of the movable coil 52. Thus, the movable coil 52 is removed from the first track 10 and added to the second track 20 when the movable coil 52 arrives at a position shown in Fig. 5B.

In Fig. 5B the carrier 65 has reached the movable coil 51 which belongs to the third track 30 in that state. Therefore, the carrier 65 is locked to the movable coil 51 and the movable coil 51 is removed from the third track 30. Thereafter, the movable coil 51 moves the carrier 65 to the first track 10, where the movable coil 51 is added to the first track 10. Following this, the carrier 65 is unloaded by the movable coil 51 to the first track 10 and can be moved by the coils 11 to 16 of the first track 10, as shown in Fig. 5C.

Further in Fig. 5B, when the carrier 63 was unloaded from the movable coil 52 by the second track 20, the movable coil 52 is removed from the second track 20 and moved back to the first track 10. Therewith, the movable coil 52 is prepared to receive the coming carrier 62, as shown in Fig. 5C.

With such a configuration of the machine 1, the carriers 61 to 65 can be moved on different tracks, namely the first, second and third tracks 10, 20, 30, wherein some coils can be shared between the first to third tracks 10, 20, 30.

In Figs. 5A to 5C, the movable coils 51 and 52 can move the carriers 61 to 65 onto and from the transport belt. That is, the movable coil 51 can move the carriers 61 to 65 from the transport belt 25, whereas the movable coil 52 can move the carriers 61 to 65 onto the transport belt 25. Therefore, a low cost machine 1 can be realised, in which no external device is necessary to move the carriers 61 to 65 onto and from the transport belt 25.

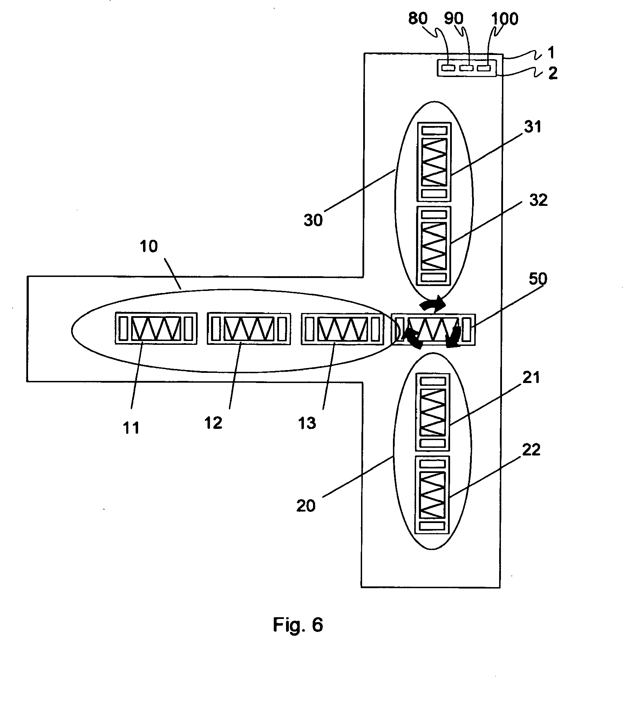

Fig. 6 illustrates a further example of a machine 1 and a control system 2 according to the basic layout described above with reference to Figs. 1 to 3. In the machine 1 according to the present fourth embodiment, the movable coil 50 is rotatable between the respective tracks 10, 20, 30. This is in contrast to the first embodiments (Figs. 1 to 3), the second embodiment (Fig. 4) and the third embodiment (Figs. 5A to 5C), where the movable coil 50 performs a translatory movement between the respective tracks.

As shown in Fig. 6, the second and third tracks 20, 30 are arranged in one line. The second and third tracks 20, 30 are arranged spaced to each other. The movable coil 50 is arranged in the space between the second and third tracks 20, 30. The first track 10 is arranged transversally to the second and third track 20, 30. That is, also the first track 10 is arranged spaced to each of the second and third tracks 20, 30. The movable coil 50 is also arranged in the space between the first track 10 and the second track 20 as well as in the space between the first track 10 and the third track 30.

In the situation shown in Fig. 6, the movable coil 50 is part of the first track 10, which comprises the coils 11, 12 and 13. In the situation shown in Fig. 6, the movable coil 50 would in fact be a coil 14 of the first track 10, even if this is not indicated in Fig. 6. The second track 20 comprises the coils 21 and 22. The third track 30 comprises the coils 31 and 32. Black arrows in Fig. 6 indicate that the movable coil 50 can be moved by turning it around its axis. Due to this, after removing the movable coil 50 from the first track 10, and rotating the movable coil 50 by 90 degrees, the movable coil 50 can be added to the second track 20, consisting of the coils 21 and 22 and in that case, the movable coil 50, or it can be added to the third track 30, consisting of the coils 31 and 32 and in that case, the movable coil 50.

In all other aspects, the machine 1 and the control system 2 of the present fourth embodiment are arranged in the same way as the machine 1 and the control system 2 of the previously described first to third embodiment.

All of the previously described implementation forms of the control system and the control method can be used separately or in all possible combinations thereof. In addition, in particular, the following modifications are conceivable.

The number of tracks 10, 20, 30, 40, 45 can be selected arbitrarily. There may be only two tracks between which a movable coil 50, 51, 52, 53 can be moved. Alternatively, there may be more than five tracks between which a movable coil 50, 51, 52, 53 can be moved. The number of coils of the first to fifth track 10, 20, 30, 40, 45 can be selected arbitrarily.

The first to fifth track 10, 20, 30, 40, 45 can be constructed according to the principle of a linear motor system.

The machine 1 can be a machine for producing solar cells, a chemical polishing machine for silicon wafers or any other machine for treating or producing an article 3.

Even if the Figs. 1 to 5 show that the movable coils 50, 51, 52, 53 are moved in particular transversally to the first to fifth tracks 10, 20, 30, 40, 45 and that the tracks are arranged in particular in parallel, it is also possible that the movable coils 50, 51, 52, 53 are moved in particular in the same direction as the first to fifth tracks 10, 20, 30, 40, 45. In this case, at least two of the first to fifth tracks 10, 20, 30, 40, 45 are arranged in the same direction. The movement of the movable coils 50, 51, 52, 53 between the first to fifth tracks 10, 20, 30, 40, 45 can also be oblique to the first to fifth tracks 10, 20, 30, 40, 45.

Further, it is possible that the movable coils 50, 51, 52, 53 can perform a combination of translation, i.e. translatory movement, and rotation.

The first to fourth detection means 70 to 73 can be configured as shown in Figs. 1 and 2 or in Fig. 3. However, other configurations are possible. In any case, it is to be secured that the first detection means 70 detects the position of a carrier, when the carrier is above the movable coil 50.

The dimensions shown in the drawings are used for illustrating the principle of the invention and are not limiting. The actual dimensions of the machine 1 and the components thereof can be selected as appropriate.

## Claims

1. Control system (2) for controlling a machine (1), comprising
carrier control means (90) for controlling a motion of a plurality of carriers (61, 62, 63, 64, 65) on at least two tracks (10, 20, 30, 40, 45) arranged spaced to each other and being arranged to receive at least one movable coil (50; 51, 52, 53; 51, 52) said movable coil (50; 51, 52, 53; 51, 52) being adapted to be either added to one of said at least two tracks (10, 20, 30, 40, 45) or removed from said one of said at least two tracks (10, 20, 30, 40, 45) so that the beginning and/or one end positions of said one of said at least two tracks (10, 20, 30, 40, 45) is changed, and
coil control means (80) for controlling a motion of said movable coil (50; 51, 52, 53; 51, 52) being movable between said at least two tracks, wherein said movable coil (50; 51, 52, 53; 51, 52) is usable for moving a carrier of said plurality of carriers between said at least two tracks,
wherein the coil control means (80) is configured to perform a control such that said moveable coil (50; 51, 52, 53; 51, 52) is either added to one of said at least two tracks (10, 20, 30, 40, 45) or removed from said one of said at least two tracks (10, 20, 30, 40, 45) so that the beginning and/or end positions of said one of said at least two tracks (10, 20, 30, 40, 45) is changed.

2. Control system according to claim 1, further comprising process control means (100) for controlling a process performed by said machine (1), wherein said process control means (100) is arranged to control said process while said coil control means (80) is controlling a motion of said movable coil (50; 51, 52, 53; 51, 52).

3. Control system according to claim 1 or 2, wherein said coil control means (80) is arranged to control said movable coil (50; 51, 52, 53; 51, 52) such that said movable coil (50; 51, 52, 53; 51, 52) is part of one of said at least two tracks (10, 20, 30, 40, 45), when said movable coil is arranged in said one track of said at least two tracks (10, 20, 30, 40, 45).

4. Control system according to one of the preceding claims, wherein said coil control means is arranged to control said movable coil (50; 51, 52, 53; 51, 52) such that said movable coil (50; 51, 52, 53; 51, 52) is added to one of said at least two tracks (10, 20, 30, 40, 45), when said movable coil (50; 51, 52, 53; 51, 52) is controlled to stop at said one of said at least two tracks (10, 20, 30, 40, 45), and that said movable coil (50; 51, 52, 53; 51, 52) is removed from said one of said at least two tracks, when said movable coil (50; 51, 52, 53; 51, 52) is controlled to start moving from said one of said at least two tracks (10, 20, 30, 40, 45) to another one of said at least two tracks (10, 20, 30, 40, 45).

5. Control system according to one of the preceding claims, wherein said coil control means (80) is arranged to control said movable coil (50; 51, 52, 53; 51, 52) such that it can only be added to or removed from the beginning or the end of said at least two tracks (10, 20, 30, 40, 45).

6. Control system according to one of the preceding claims, wherein said coil control means (80) is arranged to control said movable coil (50; 51, 52, 53; 51, 52) between two to four different tracks of said at least two tracks (10, 20, 30, 40, 45).

7. Control system according to one of the preceding claims, wherein a motion of said movable coil (50; 51, 52, 53; 51, 52) comprises translation and/or rotation.

8. Machine (1), comprising
a plurality of carriers (61, 62, 63, 64, 65) for transporting an article (3),
at least two tracks (10, 20, 30, 40, 45) by the use of which said plurality of carriers can move and which are arranged spaced to each other,
a movable coil (50; 51, 52, 53; 51, 52) movable between said at least two tracks, wherein said movable coil (50; 51, 52, 53; 51, 52) is usable for moving a carrier between said at least two tracks, and wherein said at least two tracks are arranged to receive at least one movable coil (50; 51, 52, 53; 51, 52), and
a control system according to one of the preceding claims.

9. Machine according to claim 9, wherein a track of said at least two tracks (10, 20, 30, 40, 45) comprises zero or more fixedly arranged coils (11, 12, 21, 42; 11, 12, 13, 14, 15, 16).

10. Control method for controlling a machine (1), comprising the steps
controlling a motion of a plurality of carriers (61, 62, 63, 64, 65) on at least two tracks (10, 20, 30, 40, 45) arranged spaced to each other and being arranged to receive at least one movable coil (50; 51, 52, 53; 51, 52), and
controlling a motion of said movable coil (50; 51, 52, 53; 51, 52) being movable between said at least two tracks (10, 20, 30, 40, 45), wherein said movable coil (50; 51, 52, 53; 51, 52) is usable for moving a carrier of said plurality of carriers (61, 62, 63, 64, 65) between said at least two tracks (10, 20, 30, 40, 45), and
controlling said movable coil (50; 51, 52, 53; 51, 52) by a coil control means (80) such that said moveable coil (50; 51, 52, 53; 51, 52) is either added to one of said at least two tracks (10, 20, 30, 40, 45) or removed from said one of said at least two tracks (10, 20, 30, 40, 45) so that the beginning and end positions of said one of said at least two tracks (10, 20, 30, 40, 45) is changed.

## Patentansprüche

1. Steuersystem (2) zum Steuern einer Maschine (1), das Folgendes umfasst:
Trägersteuermittel (90) zum Steuern einer Bewegung von mehreren Trägern (61, 62, 63, 64, 65) auf mindestens zwei Spuren (10, 20, 30, 40, 45), die beabstandet zu einander angeordnet sind und ausgelegt sind, mindestens eine bewegliche Spule (50; 51, 52, 53; 51, 52) zu empfangen, wobei die bewegliche Spule (50; 51, 52, 53; 51, 52) ausgelegt ist, entweder zu einer der beiden Spuren (10, 20, 30, 40, 45) hinzugefügt zu werden oder von der einen der beiden Spuren (10, 20, 30, 40, 45) entfernt zu werden, so dass der Anfangsposition und/oder eine Endposition der einen der beiden Spuren (10, 20, 30, 40, 45) geändert wird, und
Spulensteuermittel (80) zum Steuern einer Bewegung der beweglichen Spule (50; 51, 52, 53; 51, 52), die zwischen den mindestens zwei Spuren beweglich ist, wobei die bewegliche Spule (50; 51, 52, 53; 51, 52) verwendbar ist, um einen Träger der mehreren Träger zwischen den mindestens zwei Spuren zu bewegen,
wobei die Spulensteuermittel (80) konfiguriert sind, eine Steuerung so auszuführen, dass die bewegliche Spule (50; 51, 52, 53; 51, 52) entweder zu einer der mindestens zwei Spuren (10, 20, 30, 40, 45) hinzugefügt wird oder von der einen der mindestens zwei Spuren (10, 20, 30, 40, 45) entfernt wird, so dass die Anfangs- und/oder Endpositionen der einen der mindestens zwei Spuren (10, 20, 30, 40, 45) geändert werden.

2. Steuersystem nach Anspruch 1, das ferner Prozesssteuermittel (100) zum Steuern eines durch die Maschine (1) ausgeführten Prozesses umfasst, wobei die Prozesssteuermittel (100) ausgelegt sind, den Prozess zu steuern, während die Spulensteuermittel (80) eine Bewegung der beweglichen Spule (50; 51, 52, 53; 51, 52) steuern.

3. Steuersystem nach Anspruch 1 oder 2, wobei die Spulensteuermittel (80) ausgelegt sind, die bewegliche Spule (50; 51, 52, 53; 51, 52) so zu steuern, dass die bewegliche Spule (50; 51, 52, 53; 51, 52) Teil einer der mindestens zwei Spuren (10, 20, 30, 40, 45) ist, wenn die bewegliche Spule in der einen Spur der mindestens zwei Spuren (10, 20, 30, 40, 45) angeordnet ist.

4. Steuersystem nach einem der vorhergehenden Ansprüche, wobei die Spulensteuermittel ausgelegt sind, die bewegliche Spule (50; 51, 52, 53; 51, 52) so zu steuern, dass die bewegliche Spule (50; 51, 52, 53; 51, 52) zu einer der mindestens zwei Spuren (10, 20, 30, 40, 45) hinzugefügt wird, wenn die bewegliche Spule (50; 51, 52, 53; 51, 52) gesteuert wird, an der einen der mindestens zwei Spuren (10, 20, 30, 40, 45) anzuhalten, und dass die bewegliche Spule (50; 51, 52, 53; 51, 52) von der einen der mindestens zwei Spuren entfernt wird, wenn die bewegliche Spule (50; 51, 52, 53; 51, 52) gesteuert wird, zu beginnen, sich von der einen der mindestens zwei Spuren (10, 20, 30, 40, 45) zu einer anderen der mindestens zwei Spuren (10, 20, 30, 40, 45) zu bewegen.

5. Steuersystem nach einem der vorhergehenden Ansprüche, wobei die Spulensteuermittel (80) ausgelegt sind, die bewegliche Spule (50; 51, 52, 53; 51, 52) so zu steuern, dass sie nur zu dem Anfang oder dem Ende der mindestens zwei Spuren (10, 20, 30, 40, 45) hinzugefügt oder von diesen entfernt werden kann.

6. Steuersystem nach einem der vorhergehenden Ansprüche, wobei die Spulensteuermittel (80) ausgelegt sind, die bewegliche Spule (50; 51, 52, 53; 51, 52) zwischen zwei bis vier verschiedenen Spuren der mindestens zwei Spuren (10, 20, 30, 40, 45) zu steuern.

7. Steuersystem nach einem der vorhergehenden Ansprüche, wobei eine Bewegung der beweglichen Spule (50; 51, 52, 53; 51, 52) eine Translation und/oder eine Drehung umfasst.

8. Maschine (1), die Folgendes umfasst:
mehrere Träger (61, 62, 63, 64, 65) zum Befördern eines Artikels (3),
mindestens zwei Spuren (10, 20, 30, 40, 45), durch deren Verwendung sich die mehreren Träger bewegen können und die beabstandet zueinander angeordnet sind,
eine bewegliche Spule (50; 51, 52, 53; 51, 52), die zwischen den mindestens zwei Spuren beweglich ist, wobei die bewegliche Spule (50; 51, 52, 53; 51, 52) verwendbar ist, um einen Träger zwischen den mindestens zwei Spuren zu bewegen, und wobei die mindestens zwei Spuren ausgelegt sind, mindestens eine bewegliche Spule (50; 51, 52, 53; 51, 52) zu empfangen, und
ein Steuersystem nach einem der vorhergehenden Ansprüche.

9. Maschine nach Anspruch 9, wobei eine Spur der mindestens zwei Spuren (10, 20, 30, 40, 45) null oder mehrere fest angeordnete Spulen (11, 12, 21, 42; 11, 12, 13, 14, 15, 16) umfasst.

10. Steuerverfahren zum Steuern einer Maschine (1), das die folgenden Schritte umfasst:
Steuern einer Bewegung von mehreren Trägern (61, 62, 63, 64, 65) auf mindestens zwei Spuren (10, 20, 30, 40, 45), die beabstandet zueinander angeordnet sind und die ausgelegt sind, mindestens eine bewegliche Spule (50; 51, 52, 53; 51, 52) zu empfangen, und
Steuern einer Bewegung der beweglichen Spule (50; 51, 52, 53; 51, 52), die zwischen den mindestens zwei Spuren (10, 20, 30, 40, 45) beweglich ist, wobei die bewegliche Spule (50; 51, 52, 53; 51, 52) verwendbar ist, um einen Träger der mehreren Träger (61, 62, 63, 64, 65) zwischen den mindestens zwei Spuren (10, 20, 30, 40, 45) zu bewegen, und
Steuern der beweglichen Spule (50; 51, 52, 53; 51, 52) durch Spulensteuermittel (80) so, dass die bewegliche Spule (50; 51, 52, 53; 51, 52) entweder zu einer der mindestens zwei Spuren (10, 20, 30, 40, 45) hinzugefügt oder von einer der mindestens zwei Spuren (10, 20, 30, 40, 45) entfernt wird, so dass die Anfangs- und Endpositionen der einen der mindestens zwei Spuren (10, 20, 30, 40, 45) geändert werden.

## Revendications

1. Système de commande (2) pour commander une machine (1) comprenant :
un moyen de commande de transporteur (90) pour commander un mouvement d'une pluralité de supports transporteurs (61, 62, 63, 64, 65) sur au moins deux pistes (10, 20, 30, 40, 45) disposées écartées l'une de l'autre et étant agencées de façon à recevoir au moins une bobine mobile (50 ; 51, 52, 53 ; 51, 52), ladite bobine mobile (50 ; 51, 52, 53 ; 51, 52) étant adaptée de façon à soit être ajoutée à une desdites au moins deux pistes (10, 20, 30, 40, 45), soit être enlevée de ladite une desdites au moins deux pistes (10, 20, 30, 40, 45) de façon à ce que les positions du commencement et/ou d'une extrémité de ladite une desdites au moins deux pistes (10, 20, 30, 40, 45) soient changées, et
un moyen de commande de bobine (80) pour commander un mouvement de ladite bobine mobile (50 ; 51, 52, 53 ; 51, 52) pouvant être bougée entre lesdites au moins deux pistes, ladite bobine mobile (50 ; 51, 52, 53 ; 51, 52) pouvant être utilisée pour bouger un support transporteur de ladite pluralité de supports transporteurs entre lesdites au moins deux pistes,
dans lequel le moyen de commande de bobine (80) est configuré de façon à effectuer une commande de manière à ce que ladite bobine mobile (50 ; 51, 52, 53 ; 51, 52) soit soit ajoutée à une desdites au moins deux pistes (10, 20, 30, 40, 45), soit enlevée de ladite une desdites au moins deux pistes (10, 20, 30, 40, 45) de manière à ce que les positions de commencement et/ou d'extrémité de ladite une desdites au moins deux pistes (10, 20, 30, 40, 45) soit changée.

2. Système de commande selon la revendication 1, comprenant en outre un moyen de commande de processus (100) pour commander un processus exécuté par ladite machine (1), ledit moyen de commande de processus (100) étant agencé de façon à commander ledit processus tandis que ledit moyen de commande de bobine (80) commande un mouvement de ladite bobine mobile (50 ; 51, 52, 53 ; 51, 52).

3. Système de commande selon la revendication 1 ou 2, dans lequel ledit moyen de commande de bobine (80) est agencé de façon à commander ladite bobine mobile (50 ; 51, 52, 53 ; 51, 52) de manière à ce que ladite bobine mobile (50 ; 51, 52, 53 ; 51, 52) fasse partie d'une desdites au moins deux pistes (10, 20, 30, 40, 45), lorsque ladite bobine mobile est disposée dans ladite une piste desdites au moins deux pistes (10, 20, 30, 40, 45).

4. Système de commande selon une des revendications précédentes, dans lequel ledit moyen de commande de bobine est agencé de façon à commander ladite bobine mobile (50 ; 51, 52, 53 ; 51, 52) de manière à ce que ladite bobine mobile (50 ; 51, 52, 53 ; 51, 52) soit ajoutée à une desdites au moins deux pistes (10, 20, 30, 40, 45), lorsque ladite bobine mobile (50 ; 51, 52, 53 ; 51, 52) est commandée pour s'arrêter au niveau d'une desdites au moins deux pistes (10, 20, 30, 40, 45), et à ce que ladite bobine mobile (50 ; 51, 52, 53 ; 51, 52) soit enlevée de ladite une desdites au moins deux pistes, lorsque ladite bobine mobile (50 ; 51, 52, 53 ; 51, 52) est commandée pour commencer à bouger de ladite une desdites au moins deux pistes (10, 20, 30, 40, 45) à une autre desdites au moins deux pistes (10, 20, 30, 40, 45).

5. Système de commande selon l'une quelconque des revendications précédentes, dans lequel ledit moyen de commande de bobine (80) est agencé de façon à commander ladite bobine mobile (50 ; 51, 52, 53 ; 51, 52) de manière à ce qu'elle ne puisse être ajoutée qu'au commencement ou à la fin desdites au moins deux pistes (10, 20, 30, 40, 45) ou n'être enlevée que du commencement ou de la fin de celles-ci.

6. Système de commande selon l'une quelconque des revendications précédentes, dans lequel ledit moyen de commande de bobine (80) est agencé de façon à commander ladite bobine mobile (50 ; 51, 52, 53 ; 51, 52) entre deux à quatre pistes différentes desdites au moins deux pistes (10, 20, 30, 40, 45).

7. Système de commande selon l'une quelconque des revendications précédentes, dans lequel un mouvement de ladite bobine mobile (50 ; 51, 52, 53 ; 51, 52) comprend une translation et/ou une rotation.

8. Machine (1), comprenant
une pluralité de supports transporteurs (61, 62, 63, 64, 65) pour transporter un article (3),
au moins deux pistes (10, 20, 30, 40, 45) au moyen desquelles ladite pluralité de supports transporteurs peuvent bouger et qui sont disposées écartées l'une de l'autre,
une bobine mobile (50 ; 51, 52, 53 ; 51, 52) qui peut être bougée entre lesdites au moins deux pistes, ladite bobine mobile (50 ; 51, 52, 53 ; 51, 52) pouvant être utilisée pour bouger un support transporteur entre lesdites au moins deux pistes, et lesdites au moins deux pistes étant agencées de façon à recevoir au moins une bobine mobile (50 ; 51, 52, 53 ; 51, 52), et
un système robotique industriel selon une des revendications précédentes.

9. Machine selon la revendication 9, dans laquelle une piste desdites au moins deux pistes (10, 20, 30, 40, 45) comprend zéro bobine ou plus disposées de manière fixe (11, 12, 21, 42; 11, 12, 13, 14, 15, 16).

10. Procédé de commande pour commander une machine (1), comprenant les étapes consistant à :
commander un mouvement d'une pluralité de supports transporteurs (61, 62, 63, 64, 65) sur au moins deux pistes (10, 20, 30, 40, 45) disposées écartées l'une de l'autre et étant agencées de façon à recevoir au moins une bobine mobile (50 ; 51, 52, 53 ; 51, 52), et à
commander un mouvement de ladite bobine mobile (50 ; 51, 52, 53 ; 51, 52) qui peut être bougée entre lesdites au moins deux pistes (10, 20, 30, 40, 45), ladite bobine mobile (50 ; 51, 52, 53 ; 51, 52) pouvant être utilisée pour bouger un support transporteur de ladite pluralité de supports transporteurs (61, 62, 63, 64, 65) entre lesdites au moins deux pistes (10, 20, 30, 40, 45), et à
commander ladite bobine mobile (50 ; 51, 52, 53 ; 51, 52) par un moyen de commande de bobine (80) de manière à ce que ladite bobine mobile (50 ; 51, 52, 53 ; 51, 52) soit soit ajoutée à une desdites au moins deux pistes (10, 20, 30, 40, 45), soit enlevée desdites au moins deux pistes (10, 20, 30, 40, 45) de manière à ce que les positions de commencement et de fin de ladite une desdites au moins deux pistes (10, 20, 30, 40, 45) soient changées.
